# EUROPEAN PATENT SPECIFICATION

(11) **EP 1 676 063 B1**
(45) Date of publication and mention of the grant of the patent: **12.10.2011**
(21) Application number: 04793667.9
(22) Date of filing: 20.10.2004
(51) Int. Cl.: F16K 1/30, F16K 31/34, F16K 31/385

(54) **OVERFILL PROTECTION DEVICE**
ÜBERFÜLLUNGSSCHUTZVORRICHTUNG
DISPOSITIF DE PROTECTION CONTRE LE TROP-PLEIN

(30) Priority: 20.10.2003 NL 1024572
(43) Date of publication of application: 05.07.2006
(73) Proprietor: Vialle Alternative Fuel Systems B.V., 5626 EA Eindhoven (NL)
(72) Inventor: BEEM, Bob, NL-5709 ME Helmond (NL); VAN EYCK, Piet, NL-5575 CA Luijckgestel (NL); TEN BROEKE, Bas, NL-5492 NC Nijnsel (NL); JAASMA, Servaas, NL-5627 TE Eindhoven (NL)
(74) Representative: van Westenbrugge, Andries
(86) International application number: PCT/NL2004/000742
(87) International publication number: WO 2005/038313

(56) References cited:
- EP-A- 0 955 496
- US-A- 2 731 030
- US-A- 6 138 709
- US-B1- 6 408 869

## Description

The present invention relates to an overfill protection device comprising a filling channel with inlet and main outlet, wherein a main valve is fitted between them, wherein the inlet pressure acts on one side of the main valve body thereof, as well as an auxiliary valve, connected on one side via a restriction to the filling channel and connected on the other side to an auxiliary outlet, wherein the pressure that acts downstream of said restriction is the pressure that acts on the other side of said main valve body, wherein the valve body of said auxiliary valve is connected to a float device such that the auxiliary outlet is shut off when the desired fill level is reached and wherein said main valve is constructed such that this closes the main outlet when the pressure exerted on either side of the main valve body is the same.

Such an overfill protection device is used in particular in LPG installations and other constructions where overfilling of a tank, vessel or the like with **liquid** has to be prevented automatically. In this context it is desirable that a reproducible result for the closure of the overfill protection device is obtained.

An overfill protection device as described above is disclosed in the prior art. In this device the valve body of the auxiliary valve presses on a cam plate that is part of the pivot mounting of the float device. Examples thereof are found in EP 0 955 496 A1 and US 6 138 709.

If the float device reaches a certain level, the auxiliary valve body is above a recessed part in the cam plate, that is to say is no longer forcibly opened by the cam plate. The auxiliary valve body is automatically pushed away and closed by the fluid flowing through the auxiliary outlet. As a result of the closure of the auxiliary valve body, the pressure upstream thereof increases. The pressure upstream of the auxiliary valve body is the pressure that acts on one side of the main valve. The fill pressure acts on the other side of the main valve. If this pressure becomes equal, the main valve will close by means of the spring. That is to say, the main valve is also closed by the closing movement of the auxiliary valve.

Such a system is mandatory as a safety feature for installations operating with liquefied gas. However, it has been found that it cannot always be guaranteed that the main valve also actually closes when the desired liquid level is reached. As a result of a wide variety of circumstances the main valve can stick or as a result of increased friction closing may take place only later or not at all.

To make the various aspects sufficiently safe, the construction in the state of the art is made such that under the most common conditions it can be guaranteed that closing takes place. However, this means that under conditions that are not optimum (where there is no friction), for example as a result of contaminated fuel, raised fuel temperature, low pressure difference between filling station and tank, high propane content and the like, the closing function cannot be guaranteed.

The aim of the present invention is to provide an overfill protection device that functions accurately and reproducibly. That is to say, it must always be guaranteed that shutting off of the auxiliary valve, and thus shutting off of the main valve, takes place only after the desired fill level is reached, but also not later than this.

This aim is realised with an overfill protection device having the features of claim 1. This rod is preferably a pull rod and the force is preferably traction.

In contrast to the state of the art, according to the present invention closure of the auxiliary valve body is not left to the flow of the fluid through the auxiliary outlet but the various aspects are under enforced control by applying a (pull) force to the auxiliary valve body. This (pull) force is generated by the float device. Accurate closure can thus be guaranteed under all circumstances.

Because the auxiliary valve can now be of completely different construction, it is also possible to determine the moment at which the auxiliary valve closes very accurately with the aid of lever relationships. That is to say, on the one hand it is possible to guarantee closure under all circumstances when a specific fill level is reached but, on the other hand, it is always guaranteed that an optimum large quantity of fluid can be introduced.

According to an advantageous embodiment of the invention the float device pivot (part) of the float device is provided with an auxiliary arm that is connected to the pull rod. This auxiliary arm can be part of the pivot disc of the float device.

The main valve body can be constructed in any way known in the art. Particularly sensitive response can be achieved if this is constructed as a membrane. Moreover, this membrane or any other construction of the main valve body can be provided with the restriction.

According to an advantageous embodiment the float device arm can be expended beyond the pivot on the side opposite the float and provided with a counterweight for more accurate response of the float device and to reinforce the traction to be applied. This is important in particular if the **overfill** protection device is used in combination with liquids that have a relatively low relative density, such as propane, butane and mixtures thereof.

With the present invention it is possible with the aid of the lever arms to make the valve body travel over a relatively long path. A value of more than 15 mm is mentioned as an example.

According to the present invention a non-return valve is preferably fitted in the filling channel. Moreover, the non-return valve is fitted together with the **overfill** protection device and other components on a bearer plate that can be fitted as a whole on a pressure vessel. Such further components are fuel pumps, pressure relief safety devices, level indicators and the like.

The invention can be used in particular in an LPG installation for a vehicle comprising a storage tank and a fuel injection system for the internal combustion engine of said vehicle.

The invention will be explained in more detail below with reference to an illustrative embodiment shown in the drawings. In the drawings:
Fig. 1 shows, diagrammatically, a storage tank for containing a liquefied gas mixture under high pressure, such as a tank for an LPG installation in a motor vehicle;
Fig. 2 shows a view from below of a detail of the overfill protection device according to the invention; and
Fig. 3 shows the overfill protection device according to the present invention in cross-section in side view.

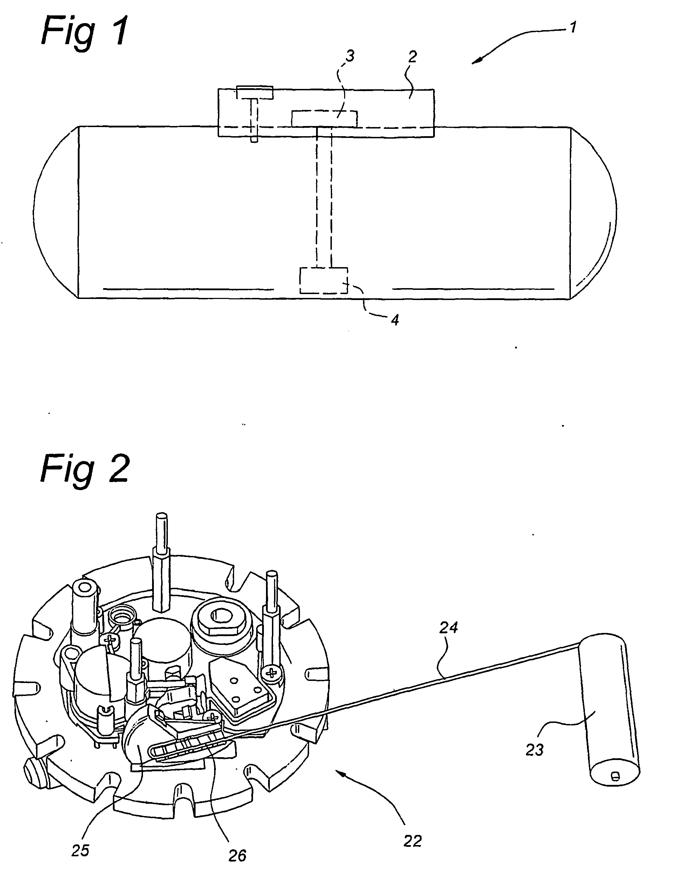

In Fig. 1 a tank of, for example, an LPG installation for a motor vehicle is shown by 1. It must be understood that the invention is not restricted to this. Other examples of applications are stationary storage tanks. The invention can be used where it has to be guaranteed that when filling with some liquid the supply of liquid has to be automatically cut off if a specific liquid level is reached. That is to say, it is also not necessary that the tank is a pressurised tank.

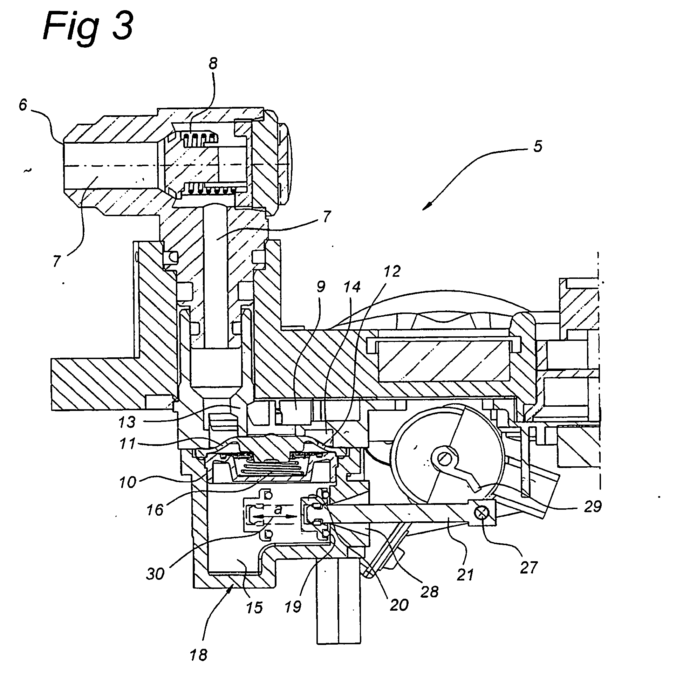

A so-called accessory housing, which accommodates the accessory plate 3, is indicated by 2. Such a housing is provided with a relief line (not shown), where should leaks arise undesirable entry of gases into a compartment is prevented. Such an accessory housing is typical for motor vehicles and can be omitted in other applications. Various components are mounted on the accessory plate, of which components a fuel pump is indicated by 4. Further components can be a level measurement control, pressure relief safety device, relief line and the like. For the present invention it is in particular the fill line and the overfill protection device arranged therein that are important. This is indicated in its entirety by 5 in Fig. 3. This consists of an inlet 6, through which the fluid to be introduced has to be introduced. This is connected to an inlet channel 7, in which a non-return valve 8 has been fitted. This functions in such a way that, via channel 7, fluid is only able to flow in via inlet 6 and is not able to move in the reverse direction. A main valve 10 adjoins inlet channel 7 downstream of the non-return valve 8. This main valve 10 consists of a main valve body or membrane 11 and a seat interacting therewith. This seat opens into a main outlet 9. In the position shown the main outlet 9 has been closed by the membrane 11 having moved up. Membrane 11 is provided with a restriction or opening 12. The membrane 11 is bordered on one side by a first chamber 14 and on the other side by a second chamber 15. A compression spring 16, which drives the membrane with a small bias into the closed position, is fitted in the second chamber 15.

Second chamber 15 is connected via restriction or opening 12 to the filling channel 7. On the other side second chamber 15 is provided with an auxiliary valve 18. This consists of a seat 19 connected to an auxiliary outlet 28 and, on the other side, an auxiliary valve body 20. This auxiliary valve body can be moved back and forth over the distance a indicated by arrow 30 by driving with a pull rod 21. Pull rod 21 is attached at 27 to a disc or arm 29 fitted close to pivot 26 of float device 22. Float device 22 also has a float 23 and a counterweight 25 arranged on the opposite side thereto (see Fig. 2).

The device described above functions as follows. When the tank 1 is empty and when fluid enters through inlet channel 7 and the non-return valve 8 opens, the membrane will move downwards, starting from the position in Fig. 3, against the pressure of spring 16. Only a small fraction of the fluid will move through opening or restriction 12 to the second chamber and will be discharged from there without hindrance via auxiliary outlet 28 when auxiliary valve 18 is open. As a result of the overpressure of the fluid introduced this situation is stable, that is to say membrane 11 will be continuously pressed down. The float 23 of the float device 22 will move upwards as the level in tank 1 rises. As a result a traction will be exerted on pull rod 21, that is to say the auxiliary valve body 20 will move to the right. When the auxiliary valve is closed by contact of the auxiliary valve body 20 on the auxiliary valve seat 19, fluid that moves through the restriction or opening 12 in the second chamber 15 will no longer be able to be discharged. As a result the pressure in the second chamber 15 will rise rapidly to the fill pressure (or higher). As a result of this effect and the presence of a spring 16, the membrane 11 will move upwards and come to bear on the seat 13, as a result of which the main outlet 9 is shut off.

With the aid of the present invention positive closure of the auxiliary valve body 20 is provided. After all, as a result of applying traction via the pull rod closure of the auxiliary valve body is no longer dependent on gravity, fill pressure and the like. As a result of the presence of a counterweight 25, a float device that responds very effectively can be obtained, especially in the case of fluids of low relative density.

Although the invention has been described above with reference to a preferred embodiment, variants that are obvious after the above and fall within the scope of the appended claims will be immediately apparent to those skilled in the art.

## Claims

1. Overfill protection device (1) comprising a housing having filling channel (7) with inlet (6) and main outlet (9), wherein a main valve (10) is fitted between them, wherein the inlet pressure acts on one side (14) of the main valve body thereof, as well as an auxiliary valve (18), connected on one side via a restriction (12) to the filling channel (7) and connected on the other side to an auxiliary outlet (28), wherein the pressure that acts downstream of said restriction (12) is the pressure that acts on the other side (15) of said main valve body, wherein the valve body (20) of said auxiliary valve is permanently connected to a float device (22) such that the auxiliary outlet (28) is shut off when the desired fill level is reached and wherein said main valve is constructed such that this closes the main outlet when the pressure exerted on either side of the main valve body is the same, said float device comprising a float (23) and an arm (24) connected to said float (23) said arm (24) being connected to said housing through a pivot (26), **characterised in that** the auxiliary valve body is mechanically connected to said float device via a rod (21) connected to a disc or an arm (29) close to the pivot (26) of the float device (22) in such a way that a force that closes the auxiliary valve is exerted by said float device on said rod when said float device rises.

2. Overfill protection device according to Claim 1, wherein the float device pivot has an auxiliary arm (29) connected to the rod.

3. Overfill protection device according to Claim 1 or 2, wherein said rod (21) is a pull rod.

4. Overfill protection device according to one of the preceding claims, wherein said float device is provided with a counterweight (25).

5. Overfill protection device according to one of the preceding claims, wherein said restriction (12) is made in said main valve body.

6. Overfill protection device according to one of the preceding claims, wherein said auxiliary valve body travels a distance (a) of more than 15 mm between the fully open and fully closed position thereof.

7. Overfill protection device according to one of the preceding claims, wherein a non-return valve (8) is fitted close to said inlet (6) in said filling channel (7).

8. Overfill protection device according to one of the preceding claims, mounted on a bearer plate (3).

9. Overfill protection device according to Claim 8, wherein said bearer plate has a fixing for a fuel pump and a pressure relief safety device.

10. Overfill protection device according to one of the preceding claims, wherein said main valve body comprises a membrane (11).

11. LPG installation for a vehicle, comprising a storage tank and fuel injection system, wherein said storage tank has an overfill protection device (5) according to one of Claims 1 - 9.

## Patentansprüche

1. Überfüllschutzvorrichtung (1), enthaltend ein Gehäuse, das einen Befüllungskanal (7) mit einem Einlass (6) und einem Hauptauslass (9) hat, wobei ein Hauptventil (10) zwischen beiden eingefügt ist und ein Einlassdruck auf eine Seite (14) des Hauptventilkörpers wirkt, wie auch ein Zusatzventil (18), das auf einer Seite über eine Einschnürung (12) mit dem Befüllungskanal (7) verbunden ist und auf der anderen Seite mit einem Zusatzauslass (28) verbunden ist, wobei der Druck, der stromabwärtig von dieser Einschnürung (12) wirkt, der Druck ist, der auf die andere Seite (15) des Hauptventilkörpers wirkt, wobei der Ventilkörper (20) des Zusatzventils dauerhaft mit einer Schwimmervorrichtung (22) derart verbunden ist, dass der Zusatzauslass (28) abgesperrt wird, wenn der gewünschte Füllstand erreicht ist, und das Hauptventil derart aufgebaut ist, dass es den Hauptauslass verschließt, wenn der Druck, der auf jeder Seite des Hauptventilkörpers wirkt, derselbe ist, wobei die Schwimmervorrichtung einen Schwimmer (23) und einen Arm (24) enthält, der mit dem Schwimmer (23) verbunden ist, wobei der Arm (24) mit dem Gehäuse durch einen Zapfen (26) verbunden ist, **dadurch gekennzeichnet, dass** der Zusatzventilkörper mit der Schwimmervorrichtung über einen Stab (21) verbunden ist, der mit einer Scheibe oder einem Arm (29) in der Nähe des Zapfens (26) der Schwimmervorrichtung (22) derart verbunden ist, dass eine Kraft, die das Zusatzventil schließt, von der Schwimmervorrichtung auf den Stab ausgeübt wird, wenn sich die Schwimmervorrichtung anhebt.

2. Überfüllschutzvorrichtung nach Anspruch 1, bei der der Zapfen der Schwimmervorrichtung einen Zusatzarm (29) hat, der mit dem Stab verbunden ist.

3. Überfüllschutzvorrichtung nach Anspruch 1 oder 2, bei der der Stab (21) ein Zugstab ist.

4. Überfüllschutzvorrichtung nach einem der vorhergehenden Ansprüche, bei der die Schwimmervorrichtung mit einem Gegengewicht (25) versehen ist.

5. Überfüllschutzvorrichtung nach einem der vorhergehenden Ansprüche, bei der die Einschnürung (12) in dem Hauptventilkörper ausgebildet ist.

6. Überfüllschutzvorrichtung nach einem der vorhergehenden Ansprüche, bei der sich der Zusatzventilkörper um eine Distanz (a) von mehr als 15 mm zwischen seiner vollständig geöffneten und seiner vollständig geschlossenen Stellung bewegt.

7. Überfüllschutzvorrichtung nach einem der vorhergehenden Ansprüche, bei der ein Rückschlagventil (8) in der Nähe des Einlasses (6) in dem Befüllungskanal (7) eingefügt ist.

8. Überfüllschutzvorrichtung nach einem der vorhergehenden Ansprüche, die auf einer Trägerplatte (3) montiert ist.

9. Überfüllschutzvorrichtung nach Anspruch 8, bei der die Trägerplatte eine Befestigungseinrichtung für eine Brennstoffpumpe und eine Druckablass-Sicherheitsvorrichtung hat.

10. Überfüllschutzvorrichtung nach einem der vorhergehenden Ansprüche, bei der der Hauptventilkörper eine Membran (11) enthält.

11. LPG-Installation für ein Fahrzeug, enthaltend einen Speichertank und ein Brennstoffeinspritzsystem, wobei der Speichertank über eine Überfüllschutzvorrichtung (5) nach einem der Ansprüche 1 bis 9 verfügt.

## Revendications

1. Dispositif de protection contre le remplissage excessif (1) comprenant un logement comportant un canal de remplissage (7) avec une entrée (6) et une sortie principale (9), dans lequel une soupape principale (10) est agencée entre elles, dans lequel la pression d'entrée agit sur un côté (14) de son corps de soupape principale, ainsi qu'une soupape auxiliaire (18), reliée sur un côté par l'intermédiaire d'une restriction (12) au canal de remplissage (7) et reliée sur l'autre côté à une sortie auxiliaire (28), dans lequel la pression qui agit en aval de ladite restriction (12) est la pression qui agit sur l'autre côté (15) dudit corps de soupape principale, dans lequel le corps de soupape (20) de ladite soupape auxiliaire est relié en permanence à un dispositif flotteur (22) de sorte que la sortie auxiliaire (28) soit coupée lorsque le niveau de remplissage souhaité est atteint et dans lequel ladite soupape principale est construite de sorte que celle-ci ferme la sortie principale lorsque la pression exercée de chaque côté du corps de soupape principale est identique, ledit dispositif flotteur comprenant un flotteur (23) et un bras (24) relié audit flotteur (23), ledit bras (24) étant relié audit logement par l'intermédiaire d'un pivot (26), **caractérisé en ce que** le corps de soupape auxiliaire est relié de façon mécanique audit dispositif flotteur par l'intermédiaire d'une tige (21) reliée à un disque ou un bras (29) près du pivot (26) du dispositif flotteur (22) de manière telle qu'une force qui ferme la soupape auxiliaire soit exercée par ledit dispositif flotteur sur ladite tige lorsque ledit dispositif flotteur monte.

2. Dispositif de protection contre le remplissage excessif selon la revendication 1, dans lequel le pivot de dispositif flotteur comporte un bras auxiliaire (29) relié à la tige.

3. Dispositif de protection contre le remplissage excessif selon la revendication 1 ou 2, dans lequel ladite tige (21) est une bielle.

4. Dispositif de protection contre le remplissage excessif selon l'une quelconque des revendications précédentes, dans lequel ledit dispositif flotteur est muni d'un contrepoids (25).

5. Dispositif de protection contre le remplissage excessif selon l'une quelconque des revendications précédentes, dans lequel ladite restriction (12) est réalisée dans ledit corps de soupape principale.

6. Dispositif de protection contre le remplissage excessif selon l'une quelconque des revendications précédentes, dans lequel ledit corps de soupape auxiliaire se déplace sur une distance (a) de plus de 15 mm entre sa position complètement ouverte et sa position complètement fermée.

7. Dispositif de protection contre le remplissage excessif selon l'une quelconque des revendications précédentes, dans lequel une soupape de non-retour (8) est agencée près de ladite entrée (6) dans ledit canal de remplissage (7).

8. Dispositif de protection contre le remplissage excessif selon l'une quelconque des revendications précédentes, monté sur une plaque d'appui (3).

9. Dispositif de protection contre le remplissage excessif selon la revendication 8, dans lequel ladite plaque d'appui comporte une fixation pour une pompe à carburant et un dispositif de sécurité détendeur de pression.

10. Dispositif de protection contre le remplissage excessif selon l'une quelconque des revendications précédentes, dans lequel ledit corps de soupape principale comprend une membrane (11).

11. Installation GPL pour un véhicule, comprenant un réservoir de stockage et un système d'injection de carburant, dans lequel ledit réservoir de stockage comporte un dispositif de protection contre le remplissage excessif (5) selon l'une quelconque des revendications 1 à 9.
